# EUROPEAN PATENT SPECIFICATION

(11) **EP 3 644 589 B1**
(45) Date of publication and mention of the grant of the patent: **08.06.2022**
(21) Application number: 19191191.6
(22) Date of filing: 12.08.2019
(51) Int. Cl.: H04N 1/00, G06F 3/12

(54) **IMAGE FORMING APPARATUS AND METHOD FOR SETTING SCREEN**
BILDERZEUGUNGSVORRICHTUNG UND VERFAHREN ZUM EINSTELLEN EINES BILDSCHIRMS
APPAREIL DE FORMATION D'IMAGES ET PROCÉDÉ DE RÉGLAGE D'ÉCRAN

(30) Priority: 25.10.2018 JP 2018200966
(43) Date of publication of application: 29.04.2020
(73) Proprietor: Toshiba Tec Kabushiki Kaisha, 141-8562 Tokyo (JP)
(72) Inventor: HAMAMOTO, Kiyoshiro, Shinagawa-ku, Tokyo 141-8562 (JP)
(74) Representative: Bandpay & Greuter

(56) References cited:
- US-A1- 2010 332 823
- US-A1- 2017 139 658

## Description

### FIELD

Embodiments described herein relate generally to an image forming apparatus and a method for setting a screen.

### BACKGROUND

A Multi-Function Peripheral (MFP) has a copy function, a scanning function, and a facsimile function.

The MFP has a function of setting a screen relating to any function as a screen to be displayed after being restarted or automatically cleared (hereinafter, referred to as an initial display screen). The screen relating to a function includes a copy screen, a scanner screen or a facsimile screen. In this way, the MFP can set the screen relating to a function selected from the functions of the MFP as the initial display screen.

Document US2017139658 relates to an information processing apparatus comprising an event detection unit configured to detect one event; a registration unit configured to register corresponding information in which the event is associated with a program which is detected by the event detection unit; and a display unit configured to display a screen which is detected by the event detection unit in accordance with the event. The display unit displays the screen which is generated by a program based on the corresponding information which is registered in the registration unit.

Document US2010332823 relates to a multi-functional peripheral capable of performing user authentication processing in cooperation with an authentication server and processing in cooperation with an external application, a user is able to easily access a screen of a previously used function immediately after logging in without necessity of switching a screen of the function of the multi-functional peripheral itself and a screen of the external application function.

### SUMMARY OF INVENTION

To solve such problem, there is provided an image forming apparatus according to claim 1 and a corresponding method according to claim 9.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a block diagram illustrating an example of a configuration of an image forming apparatus according to an embodiment;
Fig. 2 is a block diagram illustrating an example of components implemented in a processor of the image forming apparatus according to the embodiment;
Fig. 3 is a diagram illustrating an example of a configuration of a management table managed by the image forming apparatus according to the embodiment;
Fig. 4 is a flowchart depicting an example of an application setting processing for an initial display screen in the image forming apparatus according to the embodiment;
Fig. 5 is a flowchart depicting an example of a change processing for the initial display screen at the time an application set in the initial display screen cannot be started in the image forming apparatus according to the embodiment;
Fig. 6 is a flowchart depicting an example of an automatic change processing for the initial display screen in the image forming apparatus according to the embodiment;
Fig. 7 is a flowchart depicting a change processing of an initial display screen based on an initial display setting screen in the image forming apparatus according to the embodiment;
Fig. 8 is a flowchart depicting a processing of confirming whether or not the application can be started in the image forming apparatus according to the embodiment;
Fig. 9 is a diagram illustrating an example of an initial display setting screen relating to selection of a function and displayed on the image forming apparatus according to the embodiment;
Fig. 10 is a diagram illustrating an example of an initial display setting screen relating to selection of an application and displayed on the image forming apparatus according to the embodiment; and
Fig. 11 is a diagram illustrating the initial display screen after the automatic change processing displayed on the image forming apparatus according to the embodiment.

### DETAILED DESCRIPTION

In accordance with an embodiment, an image forming apparatus comprises a display section configured to display an initial display screen; a storage section configured to store one or more applications installed in the image forming apparatus; an acquisition section configured to acquire a selection instruction of a target to be set in the initial display screen; and a setting section configured to set a screen relating to an application as the initial display screen in response to the selection instruction of the application contained in one or more applications.

Hereinafter, embodiments are described with reference to the accompanying drawings.

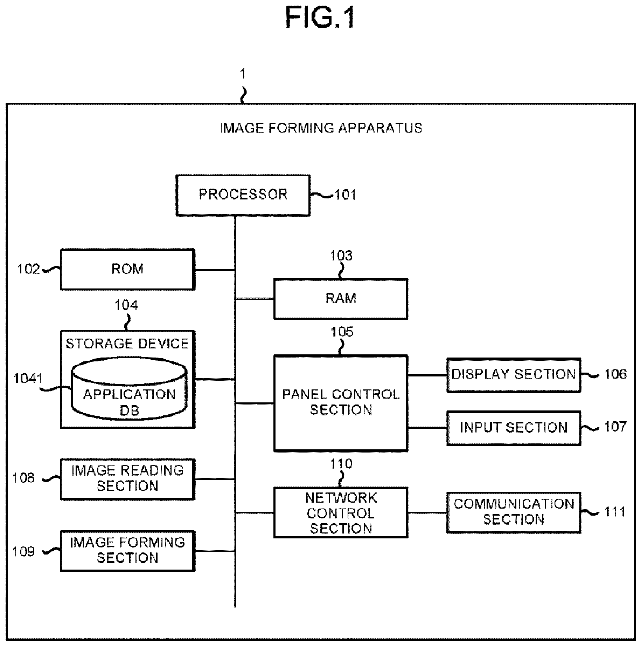

Fig. 1 is a block diagram illustrating an example of a configuration of an image forming apparatus 1. For example, the image forming apparatus 1 is an MFP. The image forming apparatus 1 has a copy function, a scanning function and a facsimile function. The copy function, the scanning function and the facsimile function are also referred to as functions of the image forming apparatus 1.

The image forming apparatus 1 includes a processor 101, a Read Only Memory (ROM) 102, a Random Access Memory (RAM) 103, a storage device 104, a panel control section 105, a display section 106, an input section 107, an image reading section 108, an image forming section 109, a network control section 110 and a communication section 111.

The processor 101 controls each components of the image forming apparatus 1. For example, the processor 101 is a Central Processing Unit (CPU). The processor 101 executes various processing by executing programs stored in the ROM 102 or the storage device 104. The processor 101 executes a processing in response to an input instruction input by a user operation. For example, the processor 101 executes a processing relating to the copy function in response to a copy instruction input by a user operation. The processor 101 executes a processing relating to the scanning function in response to a scanning instruction input by a user operation. The processor 101 executes a processing relating to the facsimile function in response to a facsimile instruction input by a user operation. The user operation includes not only an operation performed by a user but also an operation performed by an administrator.

The ROM 102 stores programs to be executed by the processor 101 or control data.

The RAM 103 is a working memory.

The storage device 104 is a rewritable non-volatile memory. For example, the storage device 104 is a Solid State Drive (SSD) or a Hard Disk Drive (HDD). The storage device 104 stores programs to be executed by the processor 101, control data, and the like. The storage device 104 includes an application database (DB) 1041. The application DB 1041 is an example of a storage section. The application DB 1041 stores one or more applications installed in the image forming apparatus 1. The application may be originally installed at the time of shipment of the image forming apparatus 1, or may be installed later. For example, the application is used for displaying a power consumption amount, a power saving amount or the like. The contents of the application are not particularly limited. Furthermore, the application DB 1041 manages information relating to the application installed in the image forming apparatus 1. The information relating to the application includes information indicating a storage location of the application and information for identifying the application. The application DB 1041 manages the information for identifying the application using a management table. An example of the information for identifying the application and a configuration of the management table is described below.

The panel control section 105 processes an input instruction input by a user operation in the input section 107 described below. The panel control section 105 sends input instructions to the processor 101. Thus, the processor 101 executes a processing in response to the input instruction. The panel control section 105 performs output (such as screen display) in response to the input instruction by displaying the processing result in response to the input instruction on the display section 106 described below.

The display section 106 displays various screens. For example, the display section 106 is a liquid crystal display.

The input section 107 receives an input instruction input by a user operation. For example, the input section 107 is a keyboard or a touch pad laminated on the display section 106 described below.

The image reading section 108 reads a document to obtain image data from the document. For example, the image reading section 108 is a scanner. The image reading section 108 includes an image sensor and the like. The image sensor is an image capturing element in which pixels for converting light to an electrical signal (e.g., an image signal) are arranged in a line. For example, the image sensor is a Charge Coupled Device (CCD), a Complementary Metal Oxide Semiconductor (CMOS), or another image capturing element. The image reading section 108 is used at the time the processor 101 performs the copy function, the scanning function, and the facsimile function.

The image forming section 109 forms an image on a print medium. For example, the image forming section 109 is a printer. For example, the image forming section 109 includes a photoconductive drum, an electrostatic charger, an exposure device, a developing device, and the like. The surface of the photoconductive drum is uniformly charged by the electrostatic charger. The exposure device emits light having a wavelength capable of forming a latent image on the charged photoconductive drum in response to an electrical signal of document data or image data to form an electrostatic latent image on the charged photoconductive drum. The developing device attaches a toner (e.g., a developer) to the electrostatic latent image formed on the photoconductive drum to form a toner image on the surface of the photoconductive drum. The image forming section 109 transfers the toner image formed on the surface of the photoconductive drum onto the print medium and fixes the toner image on the print medium to form an image on the print medium. The image forming section 109 is used at the time the processor 101 performs the copy function.

The network control section 110 controls communication performed by the communication section 111 described below under the control of the processor 101.

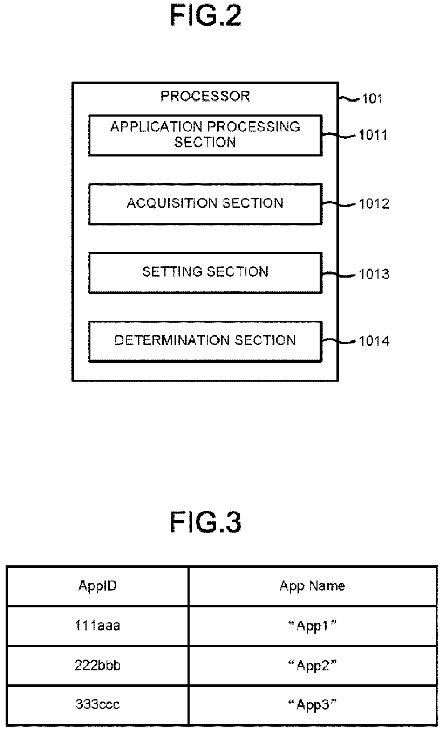

The communication section 111 is an interface through which the image forming apparatus 1 communicates with another device. The communication section 111 includes an interface through which the image forming apparatus 1 can perform facsimile communication with another device. The communication section 111 is used at the time the processor 101 performs the facsimile function. The communication section 111 includes an interface for connecting the image forming apparatus 1 to a network (e.g., the Internet). The communication section 111 is used at the time an application is installed in the image forming apparatus 1. The communication section 111 may be a wired communication interface or a wireless communication interface. Fig. 2 is a block diagram illustrating components implemented in the processor of the image forming apparatus 1.

The processor 101 implements the following components by executing programs stored in the ROM 102 or the storage device 104. The processor 101 functions as an application processing section 1011, an acquisition section 1012, a setting section 1013 and a determination section 1014.

The application processing section 1011 manages the application as exemplified below. In one example, the application processing section 1011 installs an application in response to an instruction to install the application which is input by a user operation. In this example, the application processing section 1011 may acquire the application via the communication section 111. The application processing section 1011 stores the application in the application DB 1041 to install the application. The application processing section 1011 updates the management table managed in the application DB 1041 based on the installation of the application. The application processing section 1011 adds information for identifying the installed application to the management table. In another example, the application processing section 1011 uninstalls an application in response to an instruction to uninstall the application which is input by user operation. In this example, the application processing section 1011 uninstalls a selected application among the applications stored in the application DB 1041. The application processing section 1011 updates the management table managed in the application DB 1041 based on the uninstallation of the application. The application processing section 1011 deletes the information for identifying the uninstalled application from the management table.

The acquisition section 1012 acquires an input instruction input by the user operation through the input section 107 as exemplified below. In one example, the acquisition section 1012 acquires an instruction to display an initial display setting screen. In another example, the acquisition section 1012 acquires a selection instruction of a target to be set in the initial display screen. The initial display setting screen shows a list of candidates of the target to be set in the initial display screen. The initial display setting screen includes a screen for showing a list of one or more applications installed in the image forming apparatus 1. The initial display setting screen includes a screen for showing a list of functions of the image forming apparatus 1. The initial display screen is displayed on the display section 106 after the image forming apparatus 1 is restarted or automatically cleared. The target is at least one of the one or more applications installed in the image forming apparatus 1. The target may be a function or an application among the functions of the image forming apparatus 1 and the one or more applications installed in the image forming apparatus 1.

The setting section 1013 sets a screen relating to the target as the initial display screen as exemplified below. In one example, the setting section 1013 sets the screen relating to the target as the initial display screen in response to the selection instruction of the target to be set in the initial display screen. In this example, the setting section 1013 sets the screen relating to the selected function as the initial display screen in response to the selection instruction of any one of the functions of the image forming apparatus 1. The setting section 1013 sets the screen relating to the selected application as the initial display screen in response to the selection instruction of the application among the one or more applications installed in the image forming apparatus 1. In another example, if the application to be set in the initial display screen cannot be started, the setting section 1013 automatically sets a screen relating to a target different from the application as the initial display screen.

The determination section 1014 determines (e.g., confirms) whether or not the application set in the initial display screen can be started as exemplified below. The determination section 1014 determines whether or not the application can be started by attempting to start the application. The determination section 1014 determines that the application set in the initial display screen cannot be started if a start error occurring in the application is detected.

Next, the configuration of the management table managed in the application DB 1041 is described.

Fig. 3 is a diagram illustrating the configuration of the management table.

The management table stores information for identifying an application for each of the one or more applications installed in the image forming apparatus 1. The information indicated by "App ID" and "App Name" is an example of the information for identifying the application. "App ID" indicates an ID unique to the application. "App Name" indicates a name of the application used when being displayed on the display section 106. The information for identifying the application may include information indicating whether or not the application is a paid application. The information for identifying the application may include information indicating a license expiration date of the paid application.

Next, various processing relating to the initial display screen and performed by the image forming apparatus 1 are described.

First, an application setting processing for the initial display screen is described.

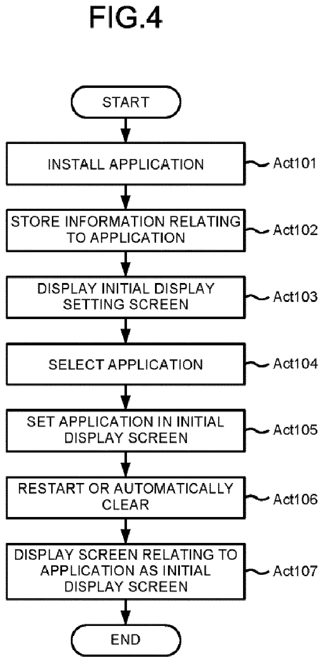

Fig. 4 is a flowchart depicting an application setting processing for the initial display screen. Initially, it is assumed that the initial display screen is a home screen. For example, the home screen is an initial screen at the time of shipment of the image forming apparatus 1, and is a screen on which icons associated with the functions of the image forming apparatus 1 are selectable. The home screen is a default screen.

The application processing section 1011 installs a first application (Act 101). In Act 101, the application processing section 1011 installs the first application in response to the instruction to install the first application. In this way, the one or more applications stored in the application DB 1041 include the first application.

The application processing section 1011 stores information relating to the first application in the application DB 1041 (Act 102). In Act 102, the application processing section 1011 adds the information for identifying the first application to the management table in the application DB 1041.

The panel control section 105 controls the display section 106 to display the initial display setting screen in response to the instruction to display the initial display setting screen input by the user operation (Act 103). In the initial display setting screen, the first application is contained in the list of candidates of the target to be set in the initial display screen.

The acquisition section 1012 acquires the selection instruction of the first application as the target to be set in the initial display screen (Act 104). Here, it is assumed that the user selects the first application as the target to be set in the initial display screen.

The setting section 1013 sets the first application in the initial display screen in response to the selection instruction of the first application (Act 105). In Act 105, the setting section 1013 sets the screen relating to the first application as the initial display screen in response to the selection instruction of the first application. The panel control section 105 may control the display section 106 to display a result indicating that the initial display screen is changed from the default home screen to the screen relating to the first application. The processor 101 may output the result indicating that the initial display screen is changed from the default home screen to the screen relating to the first application from a speaker.

The acquisition section 1012 acquires the input instruction to restart or automatically clear the image forming apparatus 1 which is input by the user operation (Act 106).

The panel control section 105 controls the display section 106 to display the screen relating to the first application as the initial display screen in response to the input instruction to restart or automatically clear the image forming apparatus 1 which is input by the user operation (Act 107). In this way, the user can confirm that the selected first application is set in the initial display screen.

According to the processing shown in Fig. 4, the image forming apparatus 1 can set the screen relating to the desired application selected by the user as the initial display screen. In this way, the user can easily use the desired application because steps for operating the screen can be simplified before use of the desired application.

Next, the processing of changing the initial display screen at the time the application set in the initial display screen cannot be started is described.

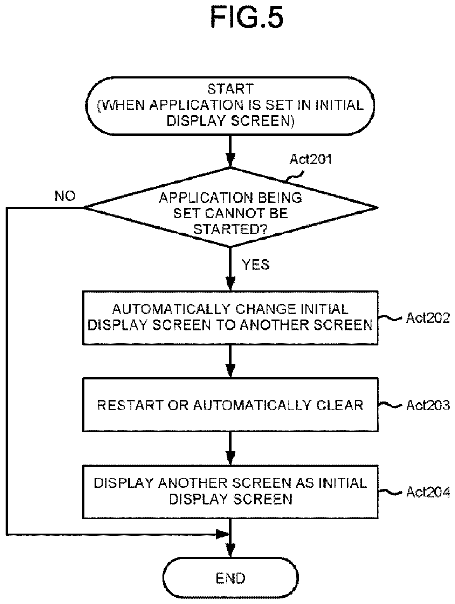

Fig. 5 is a flowchart depicting an example of the processing of changing the initial display screen at the time the application set in the initial display screen cannot be started. Here, it is assumed that the first application is set in the initial display screen.

The determination section 1014 determines whether or not the first application set in the initial display screen can be started (Act 201). If the first application can be started (No in Act 201), the image forming apparatus 1 terminates this processing. If the first application cannot be started (Yes in Act 201), the setting section 1013 automatically changes the initial display screen to a screen relating to a target different from the first application (Act 202). In Act 202, the setting section 1013 sets the screen relating to the target different from the first application set in the initial display screen (hereinafter, also referred to as another screen) as the initial display screen based on the determination result indicating that the first application cannot be started. In one example, another screen is a screen relating to any one of the copy function, the scanning function and the facsimile function of the image forming apparatus 1. In another example, another screen is a screen relating to a second application different from the first application among the applications stored in the application DB 1041. The acquisition section 1012 acquires the input instruction to restart or automatically clear the image forming apparatus 1 which is input by user operation (Act 203). The panel control section 105 controls the display section 106 to display another screen as the initial display screen in response to the input instruction to restart or automatically clear the image forming apparatus 1 which is input by user operation (Act 204). In this way, the user can confirm that the target different from the first application is set in the initial display screen.

According to the processing shown in Fig. 5, the image forming apparatus 1 can prevent an application start error screen from being displayed on the display section 106 and can maintain the display of the initial display screen. Thus, the user does not need to perform extra work such as canceling the start error screen or setting the initial display screen.

Next, an automatic change processing for the initial display screen is described.

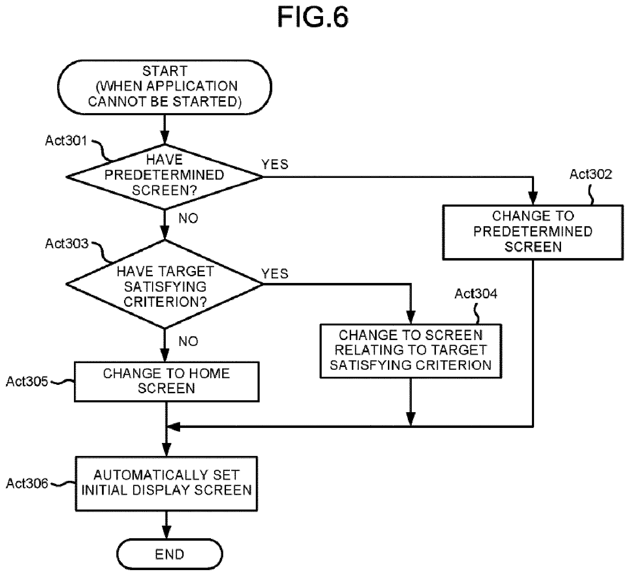

Fig. 6 is a flowchart depicting an automatic change processing for the initial display screen. The image forming apparatus 1 executes an automatic change processing for the initial display screen when the first application set in the initial display screen cannot be started. For example, the automatic change processing for the initial display screen is a process executed in Act 202 shown in Fig. 5.

The setting section 1013 determines whether or not there is a screen predetermined as the initial display screen (Act 301). The predetermined screen may be preset by the user or by the administrator. If there is the predetermined screen (Yes in Act 301), the setting section 1013 determines to set the predetermined screen as the initial display screen (Act 302).

If there is no predetermined screen (No in Act 301), the setting section 1013 determines whether or not there is a target that satisfies a criterion (Act 303). For example, the criterion may be, but is not limited to, the highest frequency of use (the number of times of use) or a threshold value for the number of times of use. Furthermore, the criterion may also indicate that the target to be set in the initial display screen is limited to either the function or the application. In this example, the processor 101 counts the number of times of use for each target using a counter. The processor 101 may count the number of times the job is executed as the number of times of use, or may count the number of times the screen relating to the target is displayed on the display section 106 as the number of times of use. If there is a target that satisfies the criterion (Yes in Act 303), the setting section 1013 determines to set the screen relating to the target satisfying the criterion as the initial display screen (Act 304). If there is no target that satisfies the criterion (No in Act 303), the setting section 1013 determines to set the default home screen as the initial display screen (Act 305).

The setting section 1013 automatically sets the initial display screen (Act 306). In Act 306, the setting section 1013 automatically changes the initial display screen based on the determination result indicating the change in Act 302, Act 304 or Act 305. According to the processing shown in Fig. 6, the image forming apparatus 1 can prevent the application start error screen from being displayed on the display section 106 and can display an appropriate initial display screen. Thus, the user does not need to perform extra work such as canceling the start error screen or setting the initial display screen. Next, a processing of changing the initial display screen based on the initial display setting screen is described.

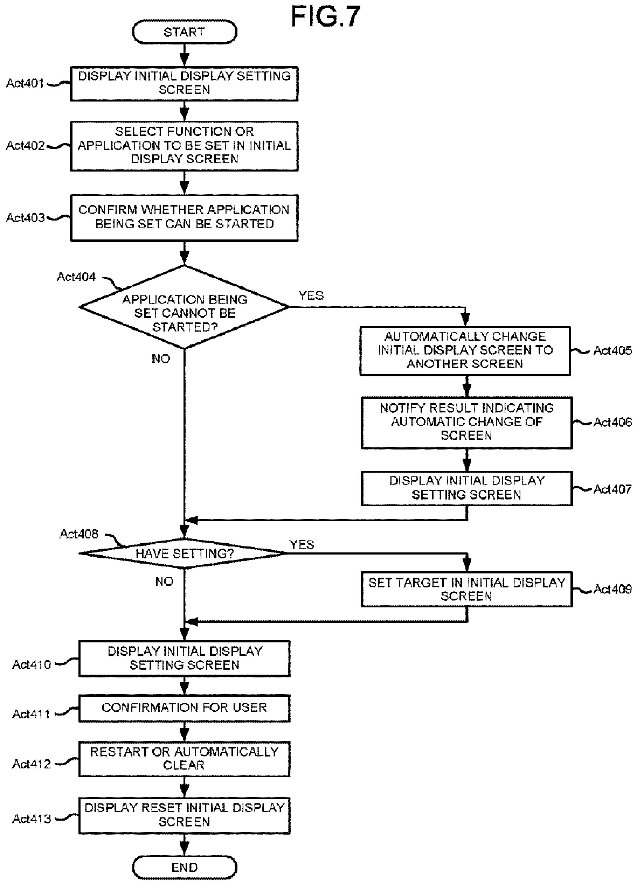

Fig. 7 is a flowchart depicting the processing of changing the initial display screen based on the initial display setting screen.

The panel control section 105 controls the display section 106 to display the initial display setting screen in response to the instruction input by the user operation to display the initial display setting screen (Act 401).

The acquisition section 1012 acquires a selection instruction of a function or an application as the target to be set in the initial display screen (Act 402). Here, it is assumed that the user selects the first application as the target to be set in the initial display screen.

The determination section 1014 confirms whether or not the first application set in the initial display screen can be started (Act 403). If the first application cannot be started (Yes in Act 404), the setting section 1013 automatically changes the initial display screen to another screen (Act 405).

The processor 101 notifies a result indicating that the initial display screen is automatically changed from the screen relating to the first application to another screen (Act 406). In Act 406, for example, the panel control section 105 controls the display section 106 to display the result indicating that the change is made automatically under the control of the processor 101. For example, the processor 101 outputs the result indicating that the change is made automatically through the speaker. Through the notification in Act 406, the user or the administrator knows specific correction of the initial display screen by the automatic change.

The panel control section 105 controls the display section 106 to display the initial display setting screen (Act 407). By performing the processing in Act 407, the display section 106 displays the initial display setting screen based on the determination result indicating that the first application cannot be started. By the display in Act 407, the user or the administrator can manually operate the initial display setting screen to change the setting of the initial setting screen in accordance with his/her preference.

The acquisition section 1012 determines whether or not there is the selection instruction of the target to be set in the initial display screen (Act 408). The selection instruction of the target to be set in the initial display screen may be input by the user or by the administrator. The setting section 1013 also proceeds to the processing in Act 408 if the first application can be started (No in Act 404).

If there is the selection instruction of the target to be set in the initial display screen (Yes in Act 408), the setting section 1013 sets the selected target in the initial display screen (Act 409). In Act 409, the setting section 1013 resets the screen relating to the selected target as the initial display screen in response to the selection instruction of the target to be set in the initial display screen.

The panel control section 105 controls the display section 106 to display the initial display setting screen (Act 410).

The processor 101 notifies the result indicating that the initial display screen is reset (Act 411). In Act 411, for example, the panel control section 105 controls the display section 106 to display the result indicating that the initial display screen is reset under the control of the processor 101. For example, the processor 101 outputs the result indicating that the initial display screen is reset through the speaker. Through the notification in Act 411, the user or the administrator can know specific contents of the reset initial display screen.

The acquisition section 1012 acquires the input instruction to restart or automatically clear the image forming apparatus 1 which is input by the user operation (Act 412). The panel control section 105 controls the display section 106 to display the reset initial display screen in response to the input instruction to restart or automatically clear the image forming apparatus 1 which is input by the user operation (Act 413).

Next, the processing of confirming whether or not the application can be started is described.

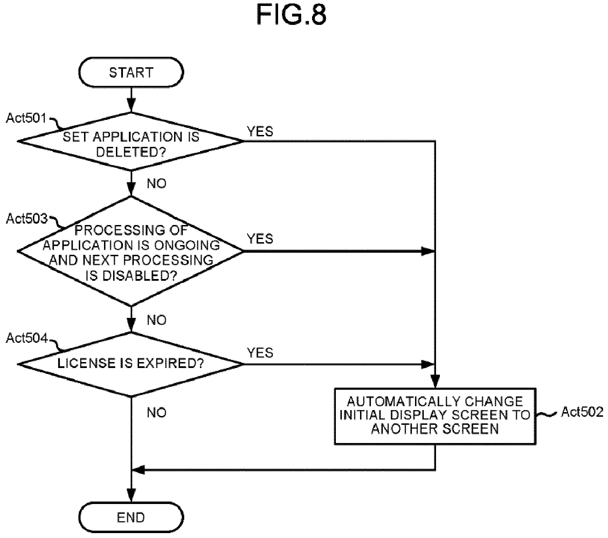

Fig. 8 is a flowchart depicting an example of a processing of confirming whether or not the application can be started. The image forming apparatus 1 may execute the processing of confirming whether or not the application can be started at any time. In one example, the image forming apparatus 1 executes the processing of confirming whether or not the application can be started in Act 201 in Fig. 5 and Act 403 in Fig. 7. In another example, the image forming apparatus 1 executes the processing of confirming whether or not the application can be started at predetermined intervals. In still another example, the determination section 1014 executes the processing of confirming whether or not the application can be started after restarting or automatically clearing the image forming apparatus 1.

The determination section 1014 determines whether or not the first application set in the initial display screen is deleted (e.g., uninstalled) (Act 501). In Act 501, the determination section 1014 refers to the application DB 1041 to determine whether or not the first application is deleted. If the first application is deleted (Yes in Act 501), the determination section 1014 determines that the initial display screen is automatically changed to the screen relating to another target different from the first application (Act 502).

If the first application is not deleted (No in Act 501), the determination section 1014 determines whether or not the processing of the first application is ongoing and a next processing is disabled (Act 503).

If the processing of the first application is ongoing and the next processing is disabled (Yes in Act 503), the determination section 1014 determines to automatically change the initial display screen to the screen relating to another target different from the first application (Act 502). If the processing of the first application is not ongoing and the next processing is enabled (No in Act 503), the determination section 1014 determines whether or not the license of the first application is expired (Act 504). In Act 504, the determination section 1014 refers to the information for identifying the application in the application DB 1041 to determine whether or not the license of the first application is expired. The first application may be paid or for free.

If the license of the first application is expired (Yes in Act 504), the determination section 1014 determines to automatically change the initial display screen to the screen relating to another target different from the first application (Act 502). If the license of the first application is not expired (No in Act 504), the determination section 1014 terminates the processing of confirming whether or not the application can be started. In other words, the determination section 1014 determines that it is not necessary to change the initial display screen to the screen relating to another target different from the first application.

According to the processing shown in Fig. 8, the image forming apparatus 1 can eliminate inconsistency occurring when the application to be set in the initial display screen is deleted, and can maintain the display of the initial display screen. Thus, the user does not need to perform extra work such as canceling the start error screen or setting the initial display screen.

Next, an example of the screen displayed on the display section 106 is described.

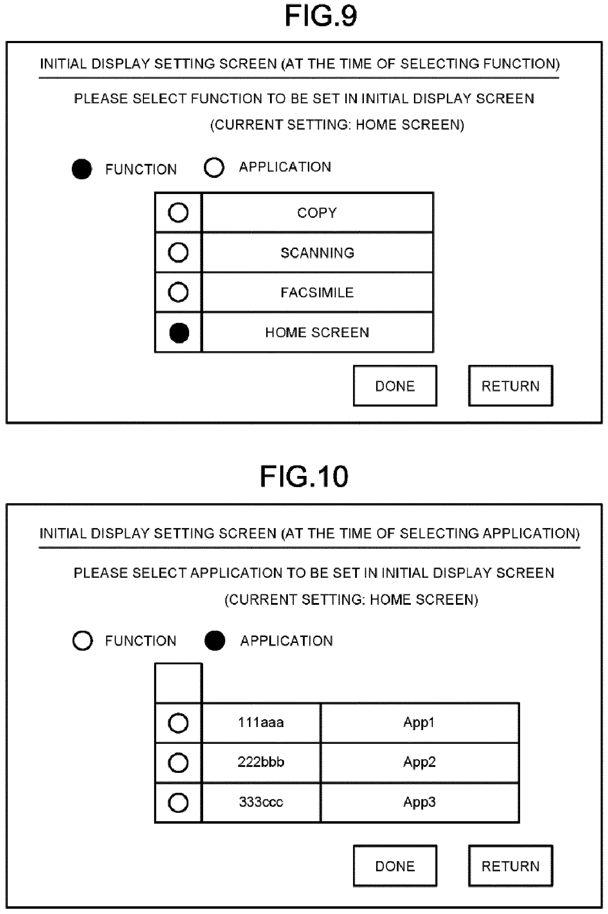

Fig. 9 is a diagram illustrating an example of the initial display setting screen relating to the selection of the function.

The display section 106 displays the initial display setting screen relating to the selection of the function. The user can select either a radio button "function" or a radio button "application". The panel control section 105 performs control to display a list of functions of the image forming apparatus 1 on the initial display setting screen in response to the instruction of selecting the radio button "function" which is input by the user operation. Here, the initial display setting screen shows selection candidates for the copy function, the scanning function and the facsimile function. The user can select the function to be set in the initial display screen. The user can finish setting the initial display screen by pressing a "done" button after the function to be set in the initial display screen is selected.

Fig. 10 is a diagram illustrating an example of the initial display setting screen relating to the selection of the application.

The display section 106 displays the initial display setting screen relating to the selection of the application. The user can select either a radio button "function" or a radio button "application". The panel control section 105 displays a list of one or more applications installed in the image forming apparatus 1 in response to the instruction of selecting the radio button "application" input by the user operation. Here, the initial display setting screen includes three selection candidates of the application shown in Fig. 3. The user can select an application to be set in the initial display screen. The user can finishes setting the initial display screen by then pressing the "done" button after the application to be set in the initial display screen is selected.

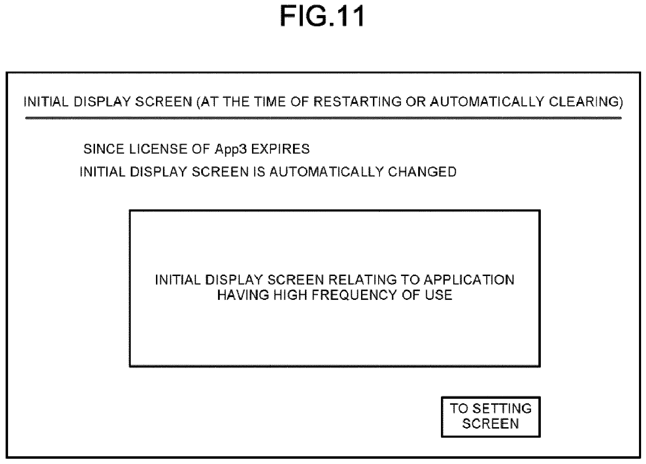

Fig. 11 is a diagram illustrating an example of the initial display screen after the automatic change processing.

The display section 106 displays the initial display screen. The initial display screen shown in Fig. 11 is a screen after automatic change from the screen relating to an App 3 to another screen by the automatic change processing described below. First, the image forming apparatus 1 sets the App 3 in the initial display screen in response to the selection instruction of the App 3 in the initial display setting screen shown in Fig. 10. Next, the image forming apparatus 1 executes the processing of confirming whether or not the App 3 can be started in response to the input instruction to restart or automatically clear the image forming apparatus 1 which is input by the user operation. Here, it is assumed that the App 3 cannot be started. Next, the image forming apparatus 1 automatically changes the initial display screen from the screen relating to the App 3 to another screen. Here, it is assumed that there is no screen predetermined as the initial display screen. Therefore, as shown in Fig. 6, the image forming apparatus 1 controls the display section 106 to display the screen relating to the target that satisfies the criterion (for example, an application having high frequency of use) as the initial display screen.

The display section 106 displays a notice indicating that the initial display screen is automatically changed and a button "to setting screen", together with the initial display screen after the automatic change. The button "to setting screen" is a button for displaying the initial display setting screen on the display section 106. The notice indicating that the initial display screen is automatically changed may include a reason for the automatic change. For example, if the image forming apparatus 1 determines that the application set in the initial display screen in Act 404 in Fig. 7 cannot be started, the reason for the automatic change can be displayed on the display section 106. For example, the image forming apparatus 1 controls the display section 106 to display a notice indicating that the initial display screen is automatically changed due to the expiration of the license of the App 3.

The panel control section 105 controls the display section 106 to display the initial display setting screen shown in Fig. 9 or Fig. 10 in response to pressing on the button "to setting screen" performed by the user operation. Through the transition of the screen displayed on the display section 106, the user or the administrator can manually set the initial display screen in accordance with his/her preference.

According to the embodiment, the image forming apparatus 1 can set the screen relating to the desired application selected by the user or the administrator as the initial display screen. As a result, the user or the administrator can reduce steps for the screen operation before use of the desired application, which facilitates the use of the desired application.

The above embodiment can be modified as follows.

The application processing section 1011 disables the execution of uninstallation of the first application while the first application is being set in the initial display screen. Specifically, the application processing section 1011 does not uninstall the first application even when the instruction to uninstall the first application input by user operation is received.

According to the modification, the image forming apparatus 1 can prevent the application set in the initial display screen from being deleted. In this way, the user does not need to perform extra work such as canceling the start error screen or setting the initial display screen.

While certain embodiments have been described, these embodiments have been presented by way of example only, and are not intended to limit the scope of the invention. The scope of the invention is defined by the accompanying claims.

## Claims

1. An image forming apparatus, comprising:
a display section (106) configured to display an initial display screen;
a storage section (104) configured to store one or more applications installed in the image forming apparatus;
an acquisition section (1012) configured to acquire a selection instruction of a target to be set in the initial display screen;
a setting section (1013) configured to set a screen relating to an application as the initial display screen in response to the selection instruction of the application contained in the one or more applications;
the target is a first target, the first target being an application among the one or more applications installed in the image forming apparatus;
**characterized in that** the image forming apparatus further comprises:
a determination section (1014) configured to determine whether or not the first target can be started if a start error occurring in the application is detected;
wherein the setting section (1013) sets a predetermined screen relating to a second target different from the first target as the initial display screen based on a determination result indicating that the first target cannot be started; and
wherein the setting section (1013) is configured to determine if the second target satisfies a criterion, and wherein the setting section (1013) is configured to set the screen relating to the second target as the initial display screen if the second target satisfies the criterion.

2. The image forming apparatus according to claim 1, wherein the criterion is based on at least one of (a) a number of times of use of the second target or (b) a frequency of use of the second target.

3. The image forming apparatus according to any one of claims 1 or 2, wherein the processor (101) is configured to provide a notification to a user in response to the setting section (1013) setting the screen relating to the second target as the initial display.

4. The image forming apparatus according to any one of claims 1 to 3, further comprising:
a determination section (1014) configured to determine whether or not the application set in the initial display screen can be started, wherein
the display section (106) displays a screen showing a list of candidates of a target to be set in the initial display screen based on a determination result indicating that the application cannot be started.

5. The image forming apparatus according to any one of claims 1 to 4, further comprising:
an application processing section (1011) configured to disable execution of uninstallation of the application while the application is set in the initial display screen.

6. The image forming apparatus according to any one of claims 1 to 5, wherein the target is a first target, wherein the processing circuit further comprises:
a determination section (1014) configured to determine whether or not the application set in the initial display screen is deleted,
wherein the setting section (1013) sets a screen relating to a second target different from the application as the initial display screen based on a determination result indicating that the application is deleted.

7. The image forming apparatus according to any one of claims 1 to Z 6, wherein the target is a first target, wherein the processing circuit further comprises:
a determination section (1014) configured to determine whether or not a license of the application set in the initial display screen is expired,
wherein the setting section (1013) sets a screen relating to a second target different from the application as the initial display screen based on a determination result indicating that the license of the application is expired.

8. The image forming apparatus according to any one of claims 1 to 7, further comprising at least one of (a) an image forming section (109) configured to form an image on a print medium and (b) a an image reading section (108) configured to read a document and obtain image data from the document.

9. A method for setting a screen of an image forming apparatus, comprising:
acquiring a selection instruction of a target to be set in an initial display screen;
setting a screen relating to an application as the initial display screen in response to the selection instruction of the application contained in the one or more applications;
the target is a first target, the first target being an application among the one or more applications installed in the image forming apparatus;
**characterized by** further comprising:
determining whether or not the first target can be started if a start error occurring in the application is detected; and
setting a predetermined screen relating to a second target different from the first target as the initial display screen based on a determination result indicating that the first target cannot be
started, and based on a determination result indicating that the second target satisfies a criterion.

10. The method according to claim 9, wherein the target is at least one of a copy function, a scanning function, and a facsimile function.

## Patentansprüche

1. Bilderzeugende Vorrichtung, Folgendes umfassend:
einen Anzeigeabschnitt (106), der dafür gestaltet ist, einen anfänglichen Anzeigebildschirm anzuzeigen,
einen Speicherabschnitt (104), der dafür gestaltet ist, eine oder mehrere Anwendungen zu speichern, die in der bilderzeugenden Vorrichtung installiert sind,
einen Erfassungsabschnitt (1012), der dafür gestaltet ist, eine Auswahlanweisung eines in dem anfänglichen Anzeigebildschirm einzustellenden Ziels zu erfassen,
einen Einstellungsabschnitt (1013), der dafür gestaltet ist, in Reaktion auf die Auswahlanweisung der in der einen oder den mehreren Anwendungen enthaltenen Anwendung einen Bildschirm bezüglich einer Anwendung als den anfänglichen Anzeigebildschirm einzustellen,
das Ziel ist ein erstes Ziel, wobei das erste Ziel eine Anwendung aus der einen oder den mehreren Anwendungen ist, die in der bilderzeugenden Vorrichtung installiert sind,
**dadurch gekennzeichnet, dass** die bilderzeugende Vorrichtung ferner Folgendes umfasst:
einen Bestimmungsabschnitt (1014), der dafür gestaltet ist, zu bestimmen, ob das erste Ziel gestartet werden kann oder nicht, wenn ein in der Anwendung auftretender Startfehler erkannt wird,
wobei der Einstellungsabschnitt (1013) einen festgelegten Bildschirm bezüglich eines zweiten Ziels, das sich von dem ersten Ziel unterscheidet, als den anfänglichen Anzeigebildschirm einstellt, basierend auf einem Bestimmungsergebnis, welches angibt, dass das erste Ziel nicht gestartet werden kann, und
wobei der Einstellungsabschnitt (1013) dafür gestaltet ist, zu bestimmen, ob das zweite Ziel ein Kriterium erfüllt, und wobei der Einstellungsabschnitt (1013) dafür gestaltet ist, den Bildschirm bezüglich des zweiten Ziels als den anfänglichen Anzeigebildschirm einzustellen, wenn das zweite Ziel das Kriterium erfüllt.

2. Bilderzeugende Vorrichtung nach Anspruch 1, wobei das Kriterium auf mindestens einem von (a) einer Anzahl von Malen der Verwendung des zweiten Ziels oder (b) einer Häufigkeit der Verwendung des zweiten Ziels basiert.

3. Bilderzeugende Vorrichtung nach einem der Ansprüche 1 oder 2, wobei der Prozessor (101) dafür gestaltet ist, in Reaktion darauf, dass der Einstellungsabschnitt (1013) den Bildschirm bezüglich des zweiten Ziels als den anfänglichen Anzeigebildschirm einstellt, eine Mitteilung für einen Benutzer bereitzustellen.

4. Bilderzeugende Vorrichtung nach einem der Ansprüche 1 bis 3, ferner Folgendes umfassend:
einen Bestimmungsabschnitt (1014), der dafür gestaltet ist, zu bestimmen, ob die in dem anfänglichen Anzeigebildschirm eingestellte Anwendung gestartet werden kann oder nicht, wobei
der Anzeigeabschnitt (106) einen Bildschirm anzeigt, der eine Liste von Kandidaten eines Ziels zeigt, das in dem anfänglichen Anzeigebildschirm einzustellen ist, basierend auf einem Bestimmungsergebnis, welches angibt, dass die Anwendung nicht gestartet werden kann.

5. Bilderzeugende Vorrichtung nach einem der Ansprüche 1 bis 4, ferner Folgendes umfassend:
einen Anwendungsverarbeitungsabschnitt (1011), der dafür gestaltet ist, die Ausführung einer Deinstallation der Anwendung, während die Anwendung in dem anfänglichen Anzeigebildschirm eingestellt ist, zu deaktivieren.

6. Bilderzeugende Vorrichtung nach einem der Ansprüche 1 bis 5, wobei das Ziel ein erstes Ziel ist, wobei die Verarbeitungsschaltung ferner Folgendes umfassend:
einen Bestimmungsabschnitt (1014), der dafür gestaltet ist, zu bestimmen, ob die in dem anfänglichen Anzeigebildschirm eingestellte Anwendung gelöscht ist oder nicht,
wobei der Einstellungsabschnitt (1013) basierend auf einem Bestimmungsergebnis, welches angibt, dass die Anwendung gelöscht ist, einen Bildschirm bezüglich eines zweiten Ziels, das sich von der ersten Anwendung unterscheidet, als den anfänglichen Anzeigebildschirm einstellt.

7. Bilderzeugende Vorrichtung nach einem der Ansprüche 1 bis 6, wobei das Ziel ein erstes Ziel ist, wobei die Verarbeitungsschaltung ferner Folgendes umfassend:
einen Bestimmungsabschnitt (1014), der dafür gestaltet ist, zu bestimmen, ob eine Lizenz der in dem anfänglichen Anzeigebildschirm eingestellten Anwendung abgelaufen ist oder nicht,
wobei der Einstellungsabschnitt (1013) basierend auf einem Bestimmungsergebnis, welches angibt, dass die Lizenz der Anwendung abgelaufen ist, einen Bildschirm bezüglich eines zweiten Ziels, das sich von der ersten Anwendung unterscheidet, als den anfänglichen Anzeigebildschirm einstellt.

8. Bilderzeugende Vorrichtung nach einem der Ansprüche 1 bis 7, ferner mindestens eines von (a) einem bilderzeugenden Abschnitt (109), der dafür gestaltet ist, ein Bild auf einem Druckmedium zu erzeugen, und (b) einen bildlesenden Abschnitt (108), der dafür gestaltet ist, ein Dokument zu lesen und Bilddaten aus dem Dokument zu gewinnen, umfassend.

9. Verfahren zum Einstellen eines Bildschirms einer bilderzeugenden Vorrichtung, Folgendes umfassend:
Erfassen einer Auswahlanweisung eines in einem anfänglichen Anzeigebildschirm einzustellenden Ziels,
Einstellen eines Bildschirms bezüglich einer Anwendung als den anfänglichen Anzeigebildschirm in Reaktion auf die Auswahlanweisung der in der einen oder den mehreren Anwendungen enthaltenen Anwendung,
das Ziel ist ein erstes Ziel, wobei das erste Ziel eine Anwendung aus der einen oder den mehreren Anwendungen ist, die in der bilderzeugenden Vorrichtung installiert sind,
**dadurch gekennzeichnet, dass** es ferner Folgendes umfasst:
Bestimmen, ob das erste Ziel gestartet werden kann oder nicht, wenn ein in der Anwendung auftretender Startfehler erkannt wird, und
Einstellen eines festgelegten Bildschirms bezüglich eines zweiten Ziels, das sich von dem ersten Ziel unterscheidet, als den anfänglichen Anzeigebildschirm, basierend auf einem Bestimmungsergebnis, welches angibt, dass das erste Ziel nicht gestartet werden kann, und basierend auf einem Bestimmungsergebnis, welches angibt, dass das zweite Ziel ein Kriterium erfüllt.

10. Verfahren nach Anspruch 9, wobei das Ziel mindestens eines von einer Kopierfunktion, einer Scan-Funktion und einer Fax-Funktion ist.

## Revendications

1. Appareil de formation d'image, comprenant :
une section d'affichage (106) configurée de manière à afficher un écran d'affichage initial ;
une section de stockage (104) configurée de manière à stocker une ou plusieurs applications installées dans l'appareil de formation d'image ;
une section d'acquisition (1012) configurée de manière à acquérir une instruction de sélection d'une cible à régler dans l'écran d'affichage initial ;
une section de réglage (1013) configurée de manière à régler un écran connexe à une application, en tant que l'écran d'affichage initial, en réponse à l'instruction de sélection de l'application contenue dans ladite une ou lesdites plusieurs applications ;
dans lequel la cible est une première cible, la première cible étant une application parmi ladite une ou lesdites plusieurs applications installées dans l'appareil de formation d'image ;
**caractérisé en ce que** l'appareil de formation d'image comprend en outre :
une section de détermination (1014) configurée de manière à déterminer si la première cible peut être démarrée ou non si une erreur de démarrage se produisant dans l'application est détectée ;
dans lequel la section de réglage (1013) règle un écran prédéterminé, connexe à une seconde cible différente de la première cible, en tant que l'écran d'affichage initial, sur la base d'un résultat de détermination indiquant que la première cible ne peut pas être démarrée ; et
dans lequel la section de réglage (1013) est configurée de manière à déterminer si la seconde cible satisfait un critère, et dans lequel la section de réglage (1013) est configurée de manière à régler l'écran connexe à la seconde cible, en tant que l'écran d'affichage initial, si la seconde cible satisfait le critère.

2. Appareil de formation d'image selon la revendication 1, dans lequel le critère est basé sur au moins un élément parmi (a) un nombre d'occurrences d'utilisation de la seconde cible ou (b) une fréquence d'utilisation de la seconde cible.

3. Appareil de formation d'image selon l'une quelconque des revendications 1 et 2, dans lequel le processeur (101) est configuré de manière à fournir une notification à un utilisateur en réponse à la section de réglage (1013) réglant l'écran connexe à la seconde cible, en tant que l'écran d'affichage initial.

4. Appareil de formation d'image selon l'une quelconque des revendications 1 à 3, comprenant en outre :
une section de détermination (1014) configurée de manière à déterminer si l'application réglée dans l'écran d'affichage initial peut être démarrée ou non, dans laquelle
la section d'affichage (106) affiche un écran montrant une liste de candidats d'une cible à régler dans l'écran d'affichage initial, sur la base d'un résultat de détermination indiquant que l'application ne peut pas être démarrée.

5. Appareil de formation d'image selon l'une quelconque des revendications 1 à 4, comprenant en outre :
une section de traitement d'application (1011) configurée de manière à désactiver l'exécution d'une désinstallation de l'application tandis que l'application est réglée dans l'écran d'affichage initial.

6. Appareil de formation d'image selon l'une quelconque des revendications 1 à 5, dans lequel la cible est une première cible, dans lequel le circuit de traitement comprend en outre :
une section de détermination (1014) configurée de manière à déterminer si l'application réglée dans l'écran d'affichage initial est supprimée ou non ;
dans laquelle la section de réglage (1013) règle un écran connexe à une seconde cible différente de l'application, en tant que l'écran d'affichage initial, sur la base d'un résultat de détermination indiquant que l'application est supprimée.

7. Appareil de formation d'image selon l'une quelconque des revendications 1 à 6, dans lequel la cible est une première cible, dans lequel le circuit de traitement comprend en outre :
une section de détermination (1014) configurée de manière à déterminer si une licence de l'application réglée dans l'écran d'affichage initial a expiré ou non ;
dans laquelle la section de réglage (1013) règle un écran connexe à une seconde cible différente de l'application, en tant que l'écran d'affichage initial, sur la base d'un résultat de détermination indiquant que la licence de l'application a expiré.

8. Appareil de formation d'image selon l'une quelconque des revendications 1 à 7, comprenant en outre au moins l'une parmi (a) une section de formation d'image (109) configurée de manière à former une image sur un support d'impression, et (b) une section de lecture d'image (108) configurée de manière à lire un document et à obtenir des données d'image à partir du document.

9. Procédé de réglage d'un écran d'un appareil de formation d'image, comprenant les étapes ci-dessous consistant à :
acquérir une instruction de sélection d'une cible à régler dans un écran d'affichage initial ;
régler un écran connexe à une application, en tant que l'écran d'affichage initial, en réponse à l'instruction de sélection de l'application contenue dans ladite une ou lesdites plusieurs applications ;
dans lequel la cible est une première cible, la première cible étant une application parmi ladite une ou lesdites plusieurs applications installées dans l'appareil de formation d'image ;
**caractérisé en ce que** le procédé comprend en outre les étapes ci-dessous consistant à :
déterminer si la première cible peut être démarrée ou non si une erreur de démarrage se produisant dans l'application est détectée ; et
régler un écran prédéterminé connexe à une seconde cible, différente de la première cible, en tant que l'écran d'affichage initial, sur la base d'un résultat de détermination indiquant que la première cible ne peut pas être démarrée, et sur la base d'un résultat de détermination indiquant que la seconde cible satisfait un critère.

10. Procédé selon la revendication 9, dans lequel la cible correspond à au moins une fonction parmi une fonction de copie, une fonction de balayage et une fonction de fac-similé.
